# EUROPEAN PATENT APPLICATION

(11) **EP 2 725 271 A1**
(43) Date of publication of application: **30.04.2014**
(21) Application number: 12804245.4
(22) Date of filing: 26.06.2012
(51) Int. Cl.: F16K 17/20, F16K 39/02, F25B 41/06

(54) **FLOW-ADJUSTING VALVE**

(30) Priority: 27.06.2011 CN 201110175317
(71) Applicant: Zhejiang Sanhua Co. Ltd., 312500 Zhejiang (CN)
(72) Inventor: LV, Ming, Zhejiang 312500 (CN)
(74) Representative: Epping - Hermann - Fischer
(86) International application number: PCT/CN2012/077507
(87) International publication number: WO 2013/000389

(57) **Abstract**

A flow-adjusting valve comprising a valve base (1) and a valve rod (2). The valve base (1) has arranged within a valve cavity thereof a valve opening (121). The valve rod (2) opens or shuts the valve opening (121). The valve rod (2) is tube-shaped, and the lower part thereof is a cylinder. The valve base (1) has arranged at circumferential positions around the valve opening (121) a sealing stepped surface (123). A lower end face of the valve rod (2) is sealedly in contact with or disengaged from the sealing stepped surface (123). Furthermore, the valve opening (121) has protruding upwards along the axial direction thereof a sleeve protrusion part (122). The sealing stepped surface (123) is arranged within the sleeve protrusion part (122). The structure of flow-adjusting valve on the one hand balances a refrigerant pressure exerted along the axial direction of the valve rod (2) while on the other hand improves the service life and sealing performance of the valve rod (2).

## Description

The present application claims the benefit of priority to Chinese Patent Application No. 201110175317.5, entitled "FLOW-ADJUSTING VALVE" and filed with the Chinese State Intellectual Property Office on June 27, 2011, the entire disclosure of which is incorporated herein by reference.

### FIELD OF THE INVENTION

The present application relates to the technical field of the fluid control component, and particularly to a flow-adjusting valve.

### BACKGROUND OF THE INVENTION

The flow-adjusting valve is an important component of the refrigeration system, and is another one of four fundamental components of the refrigeration system besides the evaporator, the compressor and the condenser. Operation process of the flow-adjusting valve is generally as follows: with the energizing or de-energizing of the coil device, the valve needle is driven to adjust the opening degree of the valve port, so as to adjust the flow of the refrigerant.

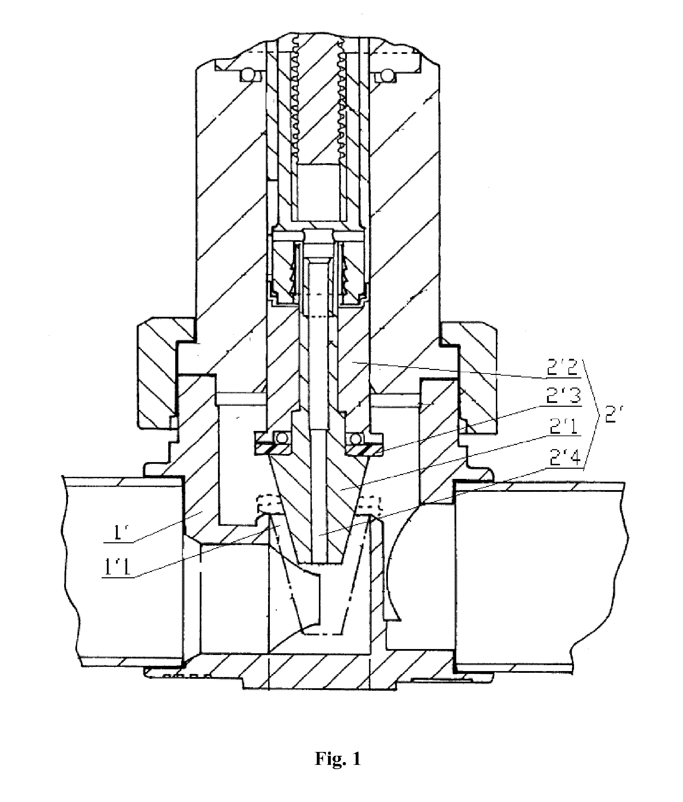

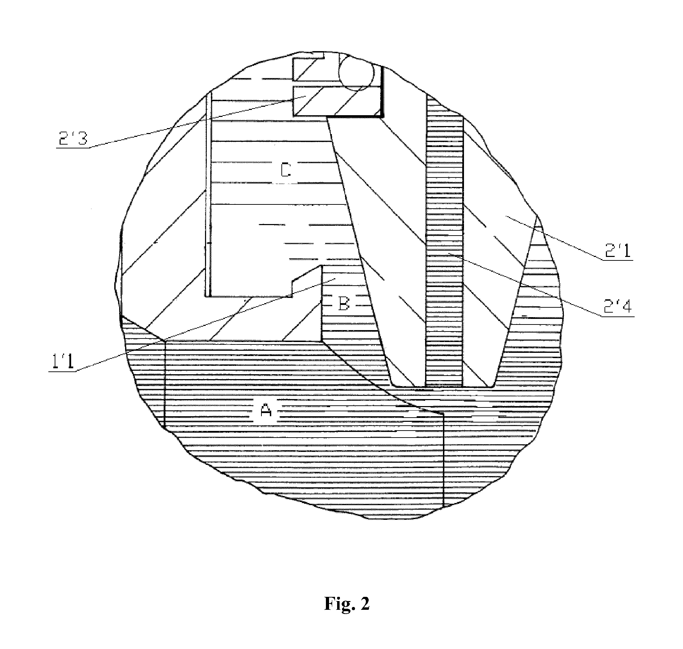

In the prior art, U.S. Patent No. US6568656B1 discloses a flow-adjusting valve. Referring to Fig. 1 and Fig. 2, Fig. 1 is a structural schematic view of a flow-adjusting valve in the prior art, and Fig. 2 is a pressure distribution schematic view of a refrigerant at the valve port of the flow-adjusting valve in Fig. 1.

As shown in Fig. 1, the flow-adjusting valve in the prior art includes a valve seat 1' and a valve rod 2'. The valve seat 1' is provided with a valve port 1'1 which is located in the valve cavity of the valve seat, and the valve rod 2' is moved up and down along the axial direction, thereby adjusting the flow of the valve port 1'1. As shown in Fig. 1, the valve rod 2' has a split structure and includes a conical tube segment 2'1, a cylindrical tube segment 2'2, and a sealing member 2'3 provided between the conical tube segment and the cylindrical tube segment. As the valve rod 2' is moved up and down, the valve port 1'1 is opened or closed by the sealing member 2'3. Furthermore, the valve rod 2' is provided with a balancing flow passage 2'4 for communicating an upper end and a lower end of the valve rod 2', thereby balancing the effect of the pressure exerted by the refrigerant on the valve rod 2'. However, the flow-adjusting valve has disadvantages as follows.

Firstly, as shown in Fig. 2, since the lower end portion of the valve rod 2' is provided with a conical tube segment 2'1, pressures from the refrigerant at the valve port 1'1 are substantially divided into three grades, that is, pressure grade A which has the maximum pressure (at the densest position of the transverse schematic line ), pressure grade B which has the moderate pressure (at the denser position of the transverse schematic line), and pressure grade C which has the minimum pressure (at the sparsest position of the transverse schematic line). Therefore different positions of the conical tube segment 2'1 are subject to the above three different pressures, respectively. As shown in Fig. 2, the lower end opening of the balancing flow passage 2'4 is extended in the area of the pressure grade A, thus the upper end of the valve rod 2' suffers a pressure of pressure grade A. It can be seen that, under the precondition that the force bearing areas of the upper end and lower end of the valve rod 2' are the same, the force suffered by the upper end of the valve rod 2' is different from the force suffered by the lower end (i.e., the conical tube segment 2'1) of the valve rod 2'. That is, pressures exerted by the refrigerant on the valve rod 2' are uneven. Therefore the stability of the axial movement of the valve rod 2' is affected.

Secondly, as shown in Fig. 1, during the closing of the valve port 1'1 by the sealing member 2'3, the sealing member 2'3 may collide with the valve port 1'1. Since the impact force is large, after performing the opening and closing operations time and again, the sealing member 2'3 is easy to be deformed, resulting in the leakage of the refrigerant and a short service life of the sealing member.

Thirdly, as shown in Fig. 1, the valve rod 2' has a split structure and includes a conical tube segment 2'1, a sealing member 2'3, and a cylindrical tube segment 2'2, and the three components are connected in a threaded manner or in other connection manners. The valve rod 2' has a risk of being loosen and disconnected due to the bump and vibration in transportation or the vibration of the compressor in operation.

Furthermore, it should be noted that, in the prior art, a flow-adjusting valve disclosed in Chinese patent application No. 200580023202.7 also has the above three disadvantages, reference may be made to the specification of the application, which will not be described in detail herein.

Therefore, it becomes an urgent problem to be solved by the person skilled in the art to improve the flow-adjusting valve in the prior art, such that, on the one hand, pressures exerted by the refrigerant on the valve rod along the axial direction thereof can be balanced, and on the other hand, the service life and sealing performance of the valve rod can be improved.

### SUMMARY OF THE INVENTION

The technical problem to be solved by the preset application is to provide a flow-adjusting valve. With the structural arrangement of the flow-adjusting valve, on the one hand, pressures exerted by the refrigerant on the valve rod along the axial direction thereof can be balanced; and on the other hand, the service life and sealing performance of the valve rod can be improved.

For solving the above technical problem, the present application provides a flow-adjusting valve. The flow-adjusting valve includes a valve seat and a valve rod. The valve seat is provided, in a valve cavity thereof, with a valve port, and the valve port is opened or closed by the valve rod. The valve rod has a tubular shape, the valve seat is provided, at a circumferential position of the valve port, with a sealing stepped surface, and a lower end face of the valve rod is hermetically contacted with the sealing stepped surface or is disengaged from the sealing stepped surface.

Preferably, the valve port is provided with a sleeve protrusion portion protruded upwards along an axial direction of the valve port, the sealing stepped surface is provided inside of the sleeve protrusion portion, and a lower end portion of the valve rod is protruded into the sleeve protrusion portion or is moved out of the sleeve protrusion portion.

Preferably, a chamfered surface is provided between a circumferential lateral wall of the valve rod and the lower end face of the valve rod, and the sealing stepped surface is an inclined surface cooperated with the chamfered surface.

Preferably, an opening groove is provided on a circumferential lateral wall of the sleeve protrusion portion for adjusting a flow amount.

Preferably, cross-sections of the valve rod that are perpendicular to an axis of the valve rod have the same outer diameter, the valve seat is provided with a guiding portion, and the valve rod is extended into an inner cavity of the valve seat through the guiding portion.

Preferably, the valve seat is provided, at a position above the guiding portion, with an annular groove, and a sealing member is provided in the annular groove and is sleeved on the valve rod.

Preferably, the valve seat has a split structure and includes an upper valve seat and a lower valve seat, the valve port and the sleeve protrusion portion are provided on the lower valve seat, and the sleeve protrusion portion is protruded into a cavity of the upper valve seat.

Preferably, the valve rod is an integral component.

Preferably, a tubular inner cavity of the valve rod is axially run through the valve rod so as to form a balancing flow passage for balancing forces applied to an upper end and a lower end of the valve rod.

Preferably, a filter screen is provided in the tubular inner cavity.

Based on the prior art, the valve rod of the flow-adjusting valve according to the present application has a tubular shape, and the lower end portion of the valve rod is a cylinder. The valve seat is provided with a sealing stepped surface at a circumferential position of the valve port, and the lower end face of the valve rod is hermetically contacted with or is disengaged from the sealing stepped surface. Since the lower end portion of the valve rod is a cylinder, but not a cone, pressures exerted by the refrigerant on the lower end of the valve rod are uniform. Meanwhile, since the valve rod has a tubular shape, and is run through along the axial direction, the pressure exerted by the refrigerant on the upper end of the valve rod is equal to that on the lower end thereof. Under the precondition that the force bearing areas of the upper end and lower end of the valve rod are the same, pressures exerted by the refrigerant on the valve rod along the axial direction of the valve rod are balanced.

Furthermore, unlike the prior art, in the present application, the lower end face of the valve rod is hermetically contacted with the sealing stepped surface at the circumferential position of the valve port. The lower end face of the valve rod is not easy to be deformed because of its strong rigidity, therefore the sealing performance and service life of the valve rod is significantly improved.

In summary, with the flow-adjusting valve according to the present application, on the one hand, pressures exerted by the refrigerant on the valve rod along the axial direction thereof can be balanced; and on the other hand, the service life and sealing performance of the valve rod can be improved.

### BRIEF DESCRIPTION OF THE DRAWINGS

Fig. 1 is a structural schematic view of a flow-adjusting valve in the prior art;
Fig. 2 is a pressure distribution schematic view of a refrigerant at the valve port of the flow-adjusting valve in Fig. 1;
Fig. 3 is a structural schematic view of a flow-adjusting valve according to an embodiment of the present application;
Fig. 4 is a structural schematic view of a valve rod of the flow-adjusting valve in Fig. 3;
Fig. 5 is a structural schematic view of a lower valve seat cooperated with the valve rod in Fig. 4;
Fig. 6 is a structural schematic view of a lower valve seat which is improved on the basis of the lower valve seat in Fig. 5;
Fig. 7 is a sectional view of the lower valve seat in Fig. 6;
Fig. 8-1 is a structural schematic view of a valve rod according to another embodiment of the present application;
Fig. 8-2 is a structural schematic view of a lower valve seat cooperated with the valve rod in Fig. 8-1;
Fig. 8-3 is a sectional view of the valve rod in Fig. 8-1;
Fig. 8-4 is a structural schematic view showing the cooperation between a valve rod and a lower valve seat according to another embodiment of the present application;
Fig. 9-1 is a schematic view showing an assembling relationship among a valve seat, a sleeve and a connecting pipe of the flow-adjusting valve in Fig. 3 ;
Fig. 9-2 is an exploded schematic view of various components in Fig. 9-1;
Fig. 9-3 is a schematic view showing an assembly relationship among a valve seat, a sleeve and a connecting pipe improved on those in Fig. 9-1; and
Fig. 9-4 is a schematic view showing an assembly relationship among a valve seat, a sleeve and a connecting pipe improved in another way on those in Fig. 9-1.

Relationships between the reference numerals and components in Fig. 1 and Fig. 2 are as follows:
1' valve seat; 1'1 valve port; 2' valve rod; 2'1 conical tube segment;
2'2 cylindrical tube segment; 2'3 sealing member; 2'4 balancing flow passage.

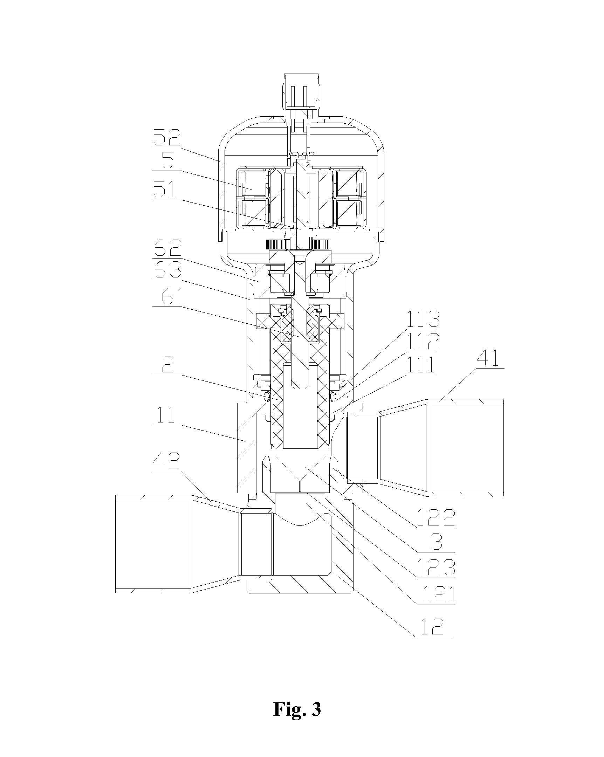

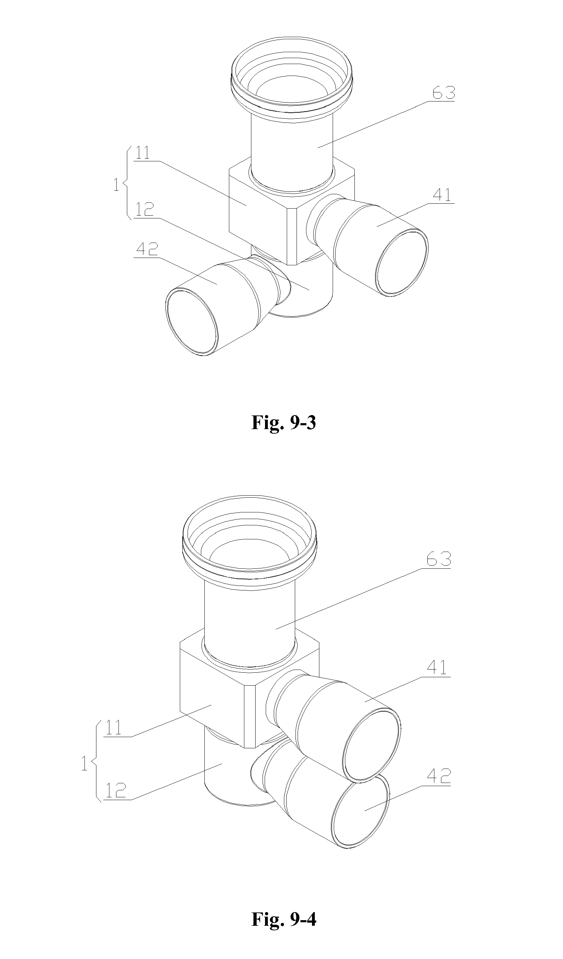

Relationships between the reference numerals and components in Fig. 3 to Fig. 9-4 are as follows:
1 valve seat; 11 upper valve seat; 111 guiding portion; 112 annular groove;
113 sealing member; 12 lower valve seat; 121 valve port; 122 sleeve protrusion portion; 123 sealing stepped surface; 124 base;
2 valve rod; 21 filter screen; 22 stepped surface; 23 clamping ring;
3 opening groove; 41 first connecting pipe; 42 second connecting pipe;
43 connecting orifice;
5 motor; 51 output shaft; 52 motor shell;
61 screw rod; 62 gear seat; 63 sleeve.

### DETAILED DESCRIPTION OF THE EMBODIMENTS

A spirit of the present application is to provide a flow-adjusting valve, the structure of which is configured that, on the one hand, pressures exerted by the refrigerant on the valve rod of the flow-adjusting valve in the axial direction can be balanced, and on the other hand, the service life and sealing performance of the valve rod can be improved.

In order that those skilled in the art can better understand technical solutions of the present application, the present application is described in detail hereinafter in conjunction with the accompanying drawings and the embodiments.

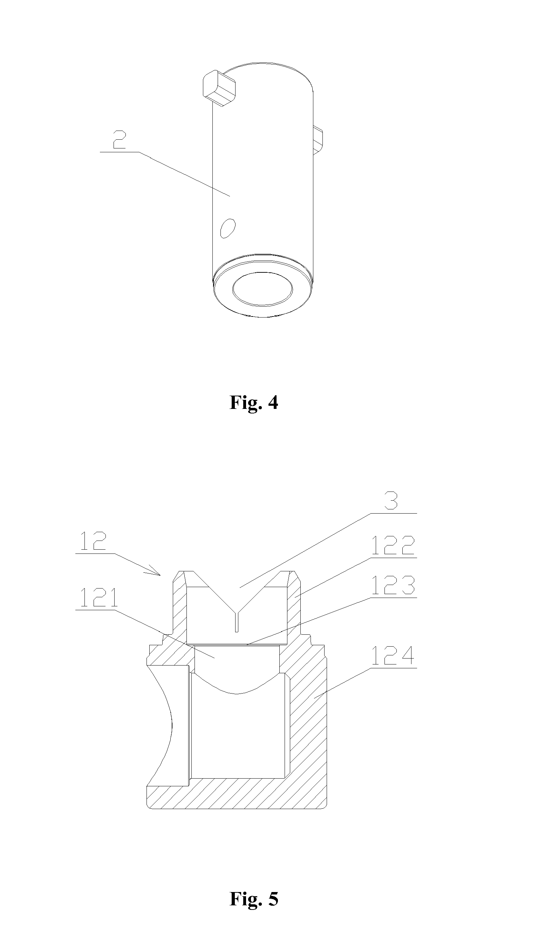

Referring to Fig. 3 and Fig. 4, Fig. 3 is a structural schematic view of a flow-adjusting valve according to an embodiment of the present application; and Fig. 4 is a structural schematic view of a valve rod of the flow-adjusting valve in Fig. 3.

In the present application, the flow-adjusting valve is configured to adjust the flow of the refrigerant. As shown in Fig. 3, the flow-adjusting valve includes a motor shell 52 in which a motor 5 is provided. The output shaft 51 of the motor 5 is in transmission connection with the screw rod 61 via a gear system, therefore the screw rod 61 is rotated with the output shaft 51. As shown in Fig. 3, the gear system is supported on the gear seat 62, a sleeve 63 is provided outside of the gear seat 62, and the screw rod 611 is passed through the gear seat 62 and is connected to the valve rod 2. With the rotation of the screw rod 61, the valve rod 2 is moved up and down axially, thereby achieving the adjusting of the flow of the refrigerant.

As shown in Fig. 3, the valve seat 1 is provided, in the valve cavity thereof, with a valve port 121 which is closed or opened by the valve rod 2. Based on this arrangement, as shown in Fig. 3 and Fig. 4, the valve rod 2 has a tubular shape, and the lower end portion of the valve rod is a cylinder. The valve seat 2 is provided, at a circumferential position of the valve port 121, with a sealing stepped surface 123. The lower end face of the valve rod 2 is hermetically contacted with the sealing stepped surface 123 or is disengaged from the sealing stepped surface 123.

Since the lower end portion of the valve rod 2 is a cylinder, but not a cone, pressures exerted by the refrigerant on the lower end of the valve rod are uniform. Meanwhile, since the valve rod 2 has a tubular shape and is run through along the axial direction, the pressure exerted by the refrigerant on the upper end of the valve rod 2 is equal to that exerted on the lower end thereof. Under the precondition that the force bearing areas of the upper and lower ends of the valve rod 2 are equal, pressures exerted by the refrigerant on the valve rod 2 along the axial direction thereof are balanced.

Furthermore, unlike the prior art, in the present application, the sealing stepped surface 123 at the circumferential position of the valve port 121 is sealed by the lower end face of the valve rod 2, the lower end face of the valve rod 2 will not be easily deformed because of its strong rigidity. Therefore the sealing performance and service life of the valve rod are significantly improved.

In summary, with the flow-adjusting valve according to the present application, on the one hand, pressures exerted by the refrigerant on the valve rod 2 along the axial direction thereof can be balanced; and on the other hand, the service life and sealing performance of the valve rod 2 can be improved.

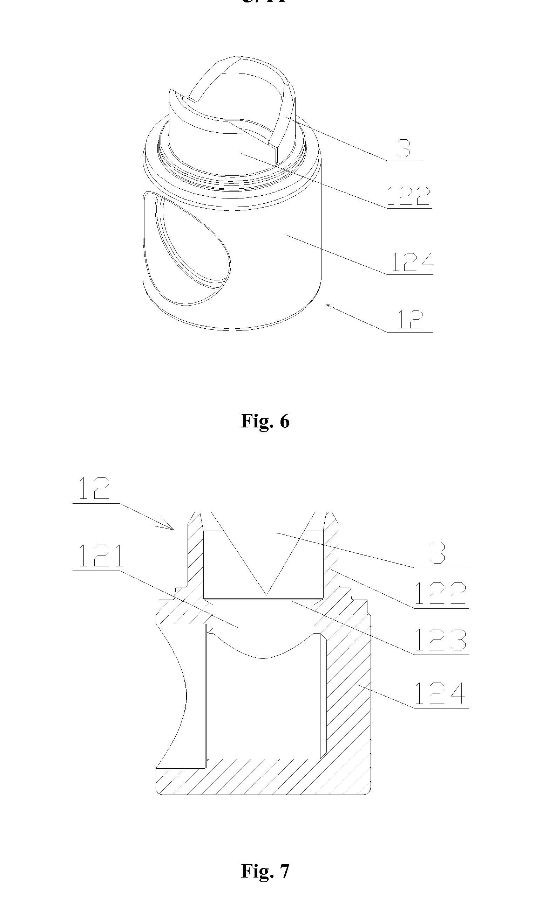

Referring to Figs. 5, 6 and 7, Fig. 5 is a structural schematic view of a lower valve seat cooperated with the valve rod in Fig. 4; Fig. 6 is a structural schematic view of a lower valve seat which is improved on the basis of the lower valve seat in Fig. 5; and Fig. 7 is a sectional view of the lower valve seat in Fig. 6.

Further improvements may be made based on the above technical solutions. As shown in Fig. 5 to Fig. 7, the valve port 121 is provided with a sleeve protrusion portion 122 protruded upwards along the axial direction of the valve port. The sealing stepped surface 123 is provided inside of the sleeve protrusion portion 122, and the lower end portion of the valve rod 2 is protruded into the sleeve protrusion portion 122 or is moved out of the sleeve protrusion portion 122, such that the lower end face of the valve rod 2 is hermetically contacted with the sealing stepped surface 123 or is disengaged from the sealing stepped surface 123. The sleeve protrusion portion 122 can guide the movement of the valve rod 2, thereby avoiding the shaking of the valve rod 2. Therefore, the axial movement stability and reliability of the valve rod is improved.

Furthermore, as shown in Fig. 7, the sealing stepped surface 123 inside of the sleeve protrusion portion 122 is an inclined surface, in view of this, a chamfered surface cooperated with the inclined surface is provided between the circumferential lateral wall and the lower end face of the valve rod 2, which structure arrangement further improves the reliability of the sealing.

Meanwhile, as shown in Fig. 5 to Fig. 7, an opening groove 3 corresponding to a flow curve is provided on the circumferential lateral wall of the sleeve protrusion portion 122. The shape of the opening groove 3 is corresponded to the required flow curve, for example, a V-shaped groove, Y-shaped groove or other shapes. An opening groove 3 having a shape corresponded to that of the flow curve required by a refrigeration system may be provided on the circumferential lateral wall of the sleeve protrusion portion 122. In operation, as the valve rod 2 is disengaged from the sleeve protrusion portion 122, the opening groove 3 is initially in communication with the valve port 121 in a way allowing a small flow passing through, and as the valve rod 2 is further moved out from the sleeve protrusion portion 122, the circulation area of the opening groove 3 is gradually increased, and the flow of the refrigerant is gradually increased. When the opening groove 3 is fully opened, the maximum flow between the opening groove and the valve port 121 is achieved. Thus it can be seen that, the flow-adjusting valve according to the present application can obtain the required flow curve.

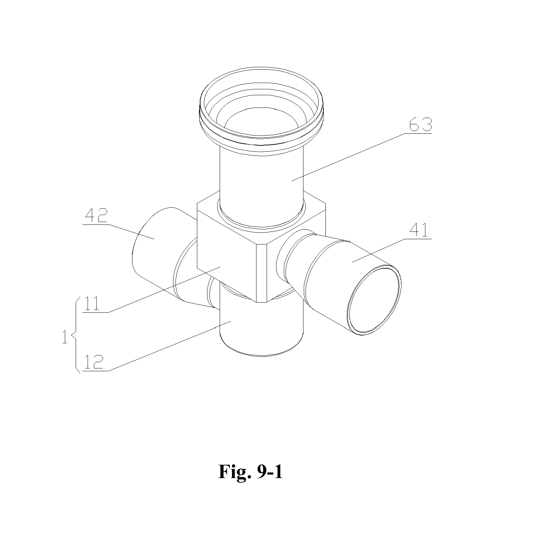

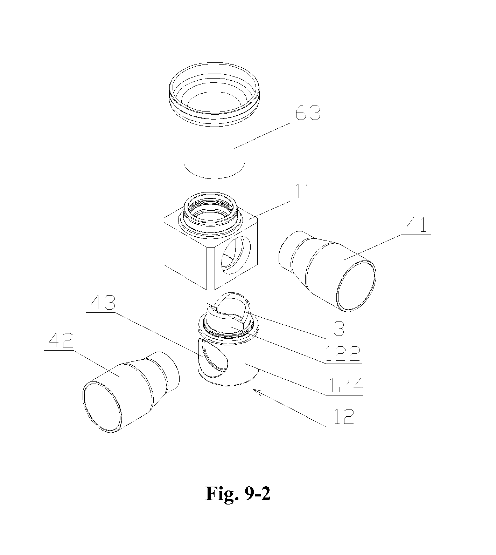

Referring to Fig. 9-1 to Fig. 9-4, Fig. 9-1 is a schematic view showing an assembly relationship among a valve seat, a sleeve and a connecting pipe of the flow-adjusting valve in Fig. 3; Fig. 9-2 is an exploded schematic view of various components in Fig. 9-1; Fig. 9-3 is a schematic view an assembly relationship among a valve seat, a sleeve and a connecting pipe improved on those in Fig. 9-1; and Fig. 9-4 is a schematic view showing an assembly relationship among a valve seat, a sleeve and a connecting pipe improved in another way on those in Fig. 9-1.

Further improvements may be made to the above technical solutions. For example, as shown in Fig. 9-1 and Fig. 9-2, the valve seat 1 has a split structure which includes an upper valve seat 11 and a lower valve seat 12. The valve port 121 and the sleeve protrusion portion 122 are provided on the lower valve seat 12, and the sleeve protrusion portion 122 is protruded into the cavity of the upper valve seat 11. In machining, the valve port 121 and the sleeve protrusion portion 122 are firstly machined on the lower valve seat 12, then the upper valve seat 11 is machined, and finally the machined lower valve seat 12 and upper valve seat 11 are assembled. It can be seen that, since the valve seat 1 has a split structure, the machining of the sleeve protrusion portion 122 can be easily realized. Therefore the machining process is simplified.

In addition, as shown in Fig. 9-1 to Fig. 9-2, the flow-adjusting valve further includes a first connecting pipe 41 and a second connecting pipe 42. The first connecting pipe 41 is connected to the upper valve seat 11, and the second connecting pipe 42 is connected to the lower valve seat 12. As shown in Fig. 9-1, the first connecting pipe 41 and the second connecting pipe 42 are arranged in parallel and are located at two sides of the valve seat 1, respectively. As shown in Fig. 9-2, the first connecting pipe 41 and the second connecting pipe 42 are arranged in parallel and are located at the same side of the valve seat 1. As shown in Fig. 9-3, the first connecting pipe 41 and the second connecting pipe 42 are arranged at different planes and are arranged substantially at an angle of 90 degree, of course, it is not limited to the 90 degree angle. It can be seen that, with the above structure arrangement, the positions of the first connecting pipe 41 and the second connecting pipe 42 can be arranged based on different application environments of the refrigeration system. Therefore, the present application has a good adaptability.

As shown in Fig. 9-2, the lower valve seat 12 includes a base 124. The sleeve protrusion portion 122 is provided at the upper end of the base 124, and the lower end face of the base 124 is closed. A connecting orifice 43 is provided on the circumferential lateral wall of the base 124, and the second connecting pipe 42 may be connected to the connecting orifice 43. The connecting orifice 43 may be provided at any positions of the circumferential lateral wall of the base 124 as required so as to achieve the structural arrangements of Figs. 9-1, 9-3 and 9-4.

In addition, further improvements may be made to the above technical solutions. As shown in Fig. 3 and Fig. 4, cross-sections of the valve rod 2 which are perpendicular to the axis of the valve rod have the same outer diameter, i.e. contour dimensions of the upper portion and the lower portion of the valve rod 2 are uniform. As shown in Fig. 3, the valve seat 1 is provided with a guiding portion 111, and the valve rod 2 is extended into an inner cavity of the valve seat 1 after passing through the guiding portion 111. In particular, as shown in Fig. 3, the guiding portion 111 is provided on the upper valve seat 11, and the valve rod 2 is extended into the inner cavity of the upper valve seat 11 after passing through the guiding portion 111.

In the flow-adjusting valve disclosed in Chinese patent application No. 200580023202.7, as is shown in Fig. 2 thereof, the valve unit 40 has a structure in which the lower portion of the structure is larger while the upper portion thereof is smaller, i.e. the lower portion has a larger outer diameter while the upper portion has a smaller outer diameter. Therefore the assembling of the flow-adjusting valve is complicated, and the assembling cost is high. However, in the present application, cross-sections of the valve rod 2 which are perpendicular to the axis of the valve rod have the same outer diameter, and the valve rod 2 is extended into the valve cavity after passing through the guiding portion 111 of the upper valve seat 11. Thus the flow-adjusting valve according to the present application has a simpler assembling process and is easier to be assembled.

Furthermore, further improvement may be made to the above technical solutions. As shown in Fig. 3, the valve seat 1 is provided with an annular groove 112 at a position above the guiding portion 111. In particular, the upper valve seat 11 is provided with the annular groove 112 at a position above the guiding portion 111, and a sealing member 113 is provided in the annular groove 112 and is sleeved on the valve rod 2.

In the flow-adjusting valve disclosed in Chinese patent No. 200580023202.7, as is shown in Fig. 2 thereof, the sealing ring 102 is provided on the valve unit 40. In particular, the sealing ring is provided on the annular groove at the circumferential lateral wall of the valve unit. Since it requires that the valve unit 40 be slid axially, in order to maintain the sealing performance of the sealing ring 102, the external threaded guide handle 46 should have a large axial length, resulting in that the valve body has a large axial dimension.

While in the present application, as shown in Fig. 3, the upper valve seat 11 is provided with an annular groove 112 at a position above the guiding portion 111, and a sealing member 113 is provided in the annular groove 112 and is sleeved outside of the valve rod 2. That is, the seal member 113 is provided on the upper valve seat 11, rather than on the valve rod 2, at this time, in order to maintain the sealing performance of the sealing member 113, there is no requirement on the axial length of the guiding portion 111, the guiding portion 111 may have a small axial length, thereby the axial dimension of the valve body is reduced.

Furthermore, as shown in Fig. 3 and Fig. 4, the present application avoids the structural arrangement of the sealing member in the prior art, the valve rod 2 may have an integrated structure along the axial direction thereof. Therefore, the risk of being disengaged due to bump and vibration in transportation or vibration of the compressor in operation can be avoided.

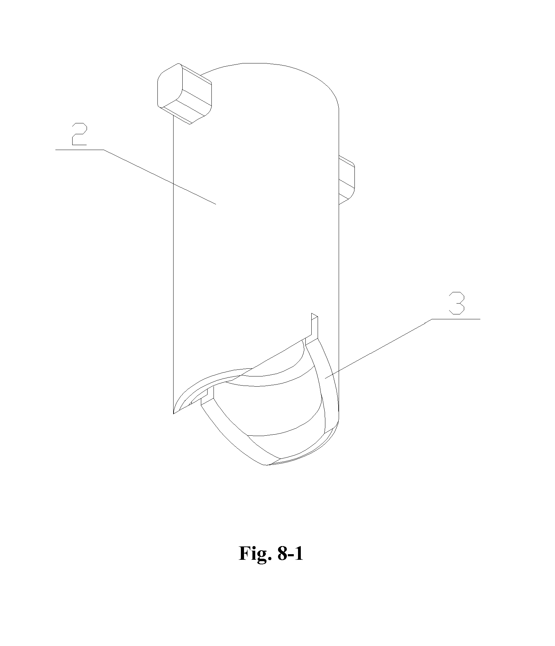

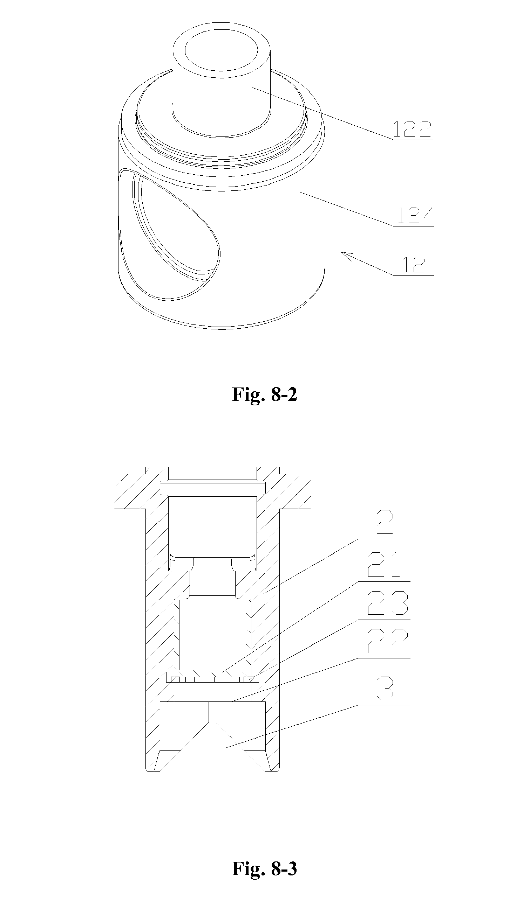

There may be another structure form of valve rod, referring to Figs. 8-1, 8-2 and Fig. 8-3, Fig. 8-1 is a structural schematic view of a valve rod according to another embodiment of the present application; Fig. 8-2 is a structural schematic view of a lower valve seat cooperated with the valve rod in Fig. 8-1; and Fig. 8-3 is a sectional view of the valve rod in Fig. 8-1.

As shown in Fig. 8-1, the valve rod 2 is provided with an opening groove 3 on the circumferential lateral wall of the lower end portion thereof. Based on this arrangement, as shown in Fig. 9-2, the lower end portion of the valve rod 2 is provided with a stepped surface 22 which is located at a position higher than that of the opening groove 3, and further, the stepped surface 22 may be provided inside of the lower end portion of the valve rod 2. Based on this, reference is also made to Fig. 9-1 to Fig. 9-3, the sleeve protrusion portion 122 may be further extended into the lower end portion of the valve rod 2 or be moved out of the valve rod 2, such that the upper end face of the sleeve protrusion portion 122 is hermetically contacted with the stepped surface 22 or is disengaged from the stepped surface 122. This kind of structure arrangement has the same technical effect as that of the structure arrangement in which the opening groove 3 is provided on the sleeve protrusion portion 122 (as shown in Fig. 4 and Fig. 5), which will not be described in detail.

Moreover, in this kind of structure arrangement, the upper end face of the sleeve protrusion portion 122 is connected with the stepped face 22 in a sealed manner, and the stepped face 22 is not easy to be deformed because of its strong rigidity. Therefore, compared with the structural arrangement of the sealing member in the prior art, the sealing performance and service life of the present application are significantly improved.

As shown in Fig. 8-3, the tubular inner cavity of the valve rod 2 is axially run through the valve rod 2 so as to form a balancing flow passage for balancing forces exerted on the upper end and the lower end of the valve rod 2, such that pressures exerted by the refrigerant on the upper end and the lower end of the valve rod 2 respectively are equal to each other.

Further, as shown in Fig. 8-3, a filter screen 21 is provided in the tubular inner cavity, and the filter screen 21 may be fixed in the tubular inner cavity of the valve rod 2 via a clamping ring 23. The filter screen 21 can filter the refrigerant to prevent impurities in the refrigerant from entering into the gap between the screw rod 61 and a nut. Thereby the movement of the screw rod 61 will not be influenced.

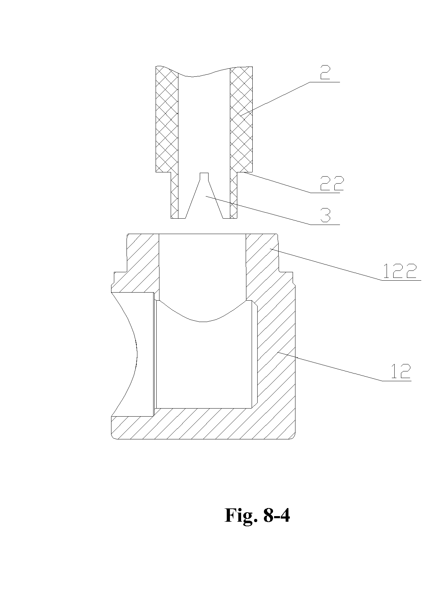

Moreover, the stepped surface 22 may be provided outside of the lower end portion of the valve rod 2. Reference may be made to Fig. 8-4, which is a structural schematic view showing the cooperation between a valve rod and a lower valve seat according to another embodiment of the present application.

As shown in Fig. 8-4, the lower end portion of the valve rod 2 is provided with an opening groove 3, a stepped surface 22 is provided outside of the lower end portion of the valve rod 2, the lower end portion of the valve rod 2 is extended into the sleeve protrusion portion 122 or is moved out of the sleeve protrusion portion 122, such that the stepped surface 22 is hermetically contacted with the upper end face of the sleeve protrusion portion 122 or is disengaged therefrom. Apparently, this kind of technical solution can solve the technical problem and achieve the object of the present application. Also, this kind of structure arrangement can form the stepped surface 22 more easily, and has a low cost.

The flow-adjusting valve according to the present application is introduced in detail through the above description. Specific examples are employed to describe the principle and embodiments of the present application. The description of the above embodiments is only provided for the understanding of the method of the present application and the core idea thereof. It should be noted that, those skilled in the art may made many modifications and improvements to the present application without departing from the principle of the present application, and all these modifications and improvements should fall within the protection scope of the claims of the present application.

## Claims

1. A flow-adjusting valve, comprising a valve seat (1) and a valve rod (2), the valve seat (1) being provided, in a valve cavity thereof, with a valve port (121), and the valve port (121) is opened or closed by the valve rod (2); wherein the valve rod (2) has a tubular shape, the valve seat (1) is provided, at a circumferential position of the valve port (121), with a sealing stepped surface (123), and a lower end face of the valve rod (2) is hermetically contacted with or is disengaged from the sealing stepped surface (123).

2. The flow-adjusting valve according to claim 1, wherein the valve port (121) is provided with a sleeve protrusion portion (122) protruded upwards along an axial direction of the valve port, the sealing stepped surface (123) is provided inside of the sleeve protrusion portion (122), and a lower end portion of the valve rod (2) is protruded into the sleeve protrusion portion (123) or is moved out of the sleeve protrusion portion (123).

3. The flow-adjusting valve according to claim 2, wherein a chamfered surface is provided between a circumferential lateral wall of the valve rod (2) and the lower end face of the valve rod (2), and the sealing stepped surface (123) is an inclined surface cooperated with the chamfered surface.

4. The flow-adjusting valve according to claim 2, wherein an opening groove (3) is provided on a circumferential lateral wall of the sleeve protrusion portion (122), for adjusting a flow amount.

5. The flow-adjusting valve according to claims 2 to 4, wherein cross-sections of the valve rod (2) that are perpendicular to an axis of the valve rod (2) have the same outer diameter, the valve seat (1) is provided with a guiding portion (111), and the valve rod (2) is extended into an inner cavity of the valve seat (1) after passing through the guiding portion (111).

6. The flow-adjusting valve according to claim 5, wherein the valve seat (1) is provided, at a position above the guiding portion (111), with an annular groove (112), and a sealing member (113) is provided in the annular groove (112) and is sleeved on the valve rod (2).

7. The flow-adjusting valve according to any one of claims 1 to 7, wherein the valve seat (1) has a split structure and comprises an upper valve seat (11) and a lower valve seat (12), the valve port (121) and the sleeve protrusion portion (122) are provided on the lower valve seat (12), and the sleeve protrusion portion (122) is protruded into a cavity of the upper valve seat (11).

8. The flow-adjusting valve according to any one of claims 1 to 7, wherein the valve rod (2) is an integral component.

9. The flow-adjusting valve according to any one of claims 1 to 7, wherein a tubular inner cavity of the valve rod (2) is axially run through the valve rod (2) so as to form a balancing flow passage for balancing forces applied to an upper end and a lower end of the valve rod (2).

10. The flow-adjusting valve according to claim 9, wherein a filter screen (21) is provided in the tubular inner cavity.
